# EUROPEAN PATENT SPECIFICATION

(11) **EP 3 606 816 B1**
(45) Date of publication and mention of the grant of the patent: **05.06.2024**
(21) Application number: 18781467.8
(22) Date of filing: 09.04.2018
(51) Int. Cl.: B63H 25/50, A01K 73/04, A01K 73/06, B63B 21/56, B63B 35/16, B63H 25/02

(54) **ARRANGEMENT FOR MANOEUVRING A BOAT**
ANORDNUNG ZUM MANÖVRIEREN EINES BOOTES
AGENCEMENT POUR LA MANOEUVRE D'UN BATEAU

(30) Priority: 07.04.2017 NO 20170593
(43) Date of publication of application: 12.02.2020
(73) Proprietor: Remøy Sea Group AS, 6091 Fosnavåg (NO)
(72) Inventor: REMØY, Jack E., 6091 Fosnavåg (NO)
(74) Representative: Andorsen, Gro Katarina
(86) International application number: PCT/NO2018/050097
(87) International publication number: WO 2018/186754

(56) References cited:
- WO-A1-01/16623
- WO-A1-97/46087
- WO-A1-2016/027055
- DE-B- 1 126 271
- GB-A- 1 340 247
- GB-A- 2 007 181
- GB-A- 2 436 456
- GB-A- 2 436 456
- US-A- 5 284 323
- US-A- 5 351 430

## Description

### Technical Field

The present invention relates to the field of manoeuvring of floating vessels, ships and boat, and in particular to manoeuvring fishing boats, especially trawlers.

### Background Art

Trawlers have increased in size over the last decades from being relatively small boats with a very small crew to large factory trawlers that can be at sea for weeks.

Although the boats have increased in size, the principles of manoeuvring the boats are basically the same. An autopilot system has been added, but nevertheless the propulsion is primarily by engine and propeller, and the manoeuvring is primarily done by a rudder.

It is true that some of the trawlers and other type of vessels have been equipped with side propellers and/or azimuth propellers or other means of propulsion, but, it is still the long since developed rudder that prevails.

The rudder is a simple and reliable device for manoeuvring the boat. Today, it is coupled to the autopilot, which sets the position of the rudder according to the set heading. If the heading is changed or a deviation from the set heading is detected, the autopilot will change the rudder position to bring the boat to the desired heading.

Deviations from the set heading most often occur due to water currents and influence from wind and waves.

When the rudder is pointing straight along the longitudinal axis of the boat, it creates little drag relative to the seawater. However, when the boat is turning, the rudder will be set at an angle relative to the boat. This increases the drag substantially, and the greater the angle, the greater the drag will be. An increased drag results in increased fuel consumption.

The increased size of trawlers requires an increased area of the rudder. A larger rudder causes more drag. This in turn requires more power to overcome the drag.

Manoeuvring during trawling requires a particularly large angle of the rudder as the speed is relatively low, only a few knots. The fuel consumption is already high during trawling, and the rudder drag will further increase the consumption.

During trawling, a symmetric trawl is considered very important. Symmetry is best achieved by keeping even tension in the warp lines, i.e. the lines extending between the trawler and the trawl doors. If the tension of the warps is different, the trawl will usually not be symmetric, and the opening of the trawl will not be optimal. The tension is regulated by giving out or reeling in on one of the warps, to increase or reduce its length.

There are many techniques for determining the tension and the length of the warps, and automatic adjustments to achieve optimum fishing. One example is shown in NO 302391, which considers water currents when the correct lengths of the warps are determined.

It is also a known technique to avoid the warps becoming damaged by ice, by moving the trawl blocks inwards during trawling. The trawl blocks are arranged at the stern of the trawler and determines at which point the warp leaves the boat. If there is ice in the sea, this point should not be too close to the side of the boat, as ice that moves along the side of the boat will tend to move inwards immediately aft of the boat. Hence, the trawl blocks are shifted somewhat towards the centre of the boat, where the ice is less susceptible to wander.

GB2007181 describes such ice davits, which are primarily intended for keeping the tow lines out of contact with the ice. The davits cannot be safely positioned in intermediate positions between the extreme positions illustrated in the drawings. The use of these davits to steer the vessel is therefore limited to substantial changes of heading. The technique cannot conveniently be used for smaller or more precise course changes, and certainly not to keep a steady heading.

DE1126271 show a system with the possibility of influencing the heading of the vessel by moving the block(s) that carry one or both of the tow lines. However, there is no manoeuvring unit described. This means that the movement of the blocks are likely done manually and to an extent judged by the skipper to be sufficient to alter the course. Such manual movement is very inaccurate, and the skipper will have to move the blocks frequently back and forth to keep the heading right.

Moreover, in DE1126271, changes in tension of the tow lines are not taken into account. When the blocks are moved, the tension in the wires will change, and this may both skew the trawl and change the heading of the vessel. The present invention takes this into account and seeks to adjust the tension when needed.

GB 2436456 discloses a system for towing a seismic array with heave compensators. The system provides active steering of marine seismic sources to maintain inline position of these sources.

US 5,284,323, discloses an apparatus for use in deploying and retrieving marine seismic cable while a vessel maintains a nominal forward speed. The apparatus includes a secondary reel located aft of the cable main reel and the streamer is wrapped at least twice around the secondary reel in a manner to avoid overlap.

### Summary of invention

The present invention has as its main objective to reduce the fuel consumption of the trawler during trawling. To achieve this, the invention reduces the drag of the rudder. To reduce the drag of the rudder, the invention reduces or eliminates the necessity of setting the rudder at an angle relative to the longitudinal axis of the boat.

The solution to this is to use the possibility of shifting the position of the trawl blocks laterally and/or longitudinally, so that the tension of the warps act unsymmetrically on the boat, and couple the trawl block shifting actuators to the manoeuvring unit, e.g. an autopilot so that the autopilot is given control of the lateral and/or longitudinal position of the trawl blocks and may use this to manoeuvre the boat.

More specifically, this is achieved by an arrangement for manoeuvring a floating vessel with reduced need for or without the need for rudder deflection, the vessel towing a load, such as a trawl, comprising at least two tow lines coupled to a respective winch on board said vessel, and at least two blocks at the aft end of the vessel, over which a respective tow line extends, at least one of the blocks being moveable transverse to the longitudinal axis of the vessel and/or longitudinally of the vessel; the position of the moveable block(s) defining a point of attack for a tension force from the tow line, characterized in that the arrangement further comprising a manoeuvring unit, the manoeuvring unit being adapted to receive input from a navigation system, and said manoeuvring unit being coupled to an actuator moving said block(s) transverse of the longitudinal axis of the vessel and/or longitudinally of the vessel, in order to change the moment of force of the tension force about a rotational centre of the vessel, and that the manoeuvring unit is equipped with a calculation unit, which detects the tension force of the tow line(s) and calculates the moment of force from the tension force on the vessel, whereby the manoeuvring unit is adapted to use a change in said moment of force to manoeuvre the vessel, that the manoeuvring unit is coupled to at least one of said winches, and being adapted to reel out or in tow line to reduce or increase tension in the tow line coupled to said winch, and that the manoeuvring unit further is coupled to a rudder on the vessel, so that the manoeuvring unit, if required, initiates a rudder deflection, working in parallel with the movement of blocks to achieve a desired heading and course over ground for the vessel.

In an embodiment with at least two blocks, the calculation unit will preferably calculate the change in the resulting moment of force from the detected tension force and the movement of the at least one block.

In a further embodiment, each tow line in a given situation is kept at equal length or tension by reeling in or out line, whereby the calculation unit is coupled to an actuator on at least one of the winches to reel in or out line.

In a still further embodiment, the calculation unit is adapted to reel in or out tow line extending over a block that has been moved, to reduce or increase tension in this line in order to achieve equal or different tension as might be required.

In an alternative or supplemental further embodiment, the calculation unit is adapted to reel in or out tow line at the opposite side of the vessel from a block that has been moved, to increase or reduce tension in this line.

In an optional embodiment, the calculation unit also detects an angle of the tow line relative to the longitudinal axis of the vessel. This can be of advantage if the angles vary substantially during the tow. The detection of an angle may be both a horizontal angle and a vertical angle.

In a preferred embodiment, the calculation unit determines a combined transverse and/or longitudinal movement of the moveable blocks, which results in a desired moment of force for manoeuvring the vessel. By being able to move more than one block a greater range of moment of force can be achieved.

The objects of the invention are also achieved by a method of manoeuvring a floating vessel with reduced need for or without the need for rudder deflection, whereby the vessel is towing a load, such as a trawl, and where at least two tow lines coupled to a respective winch on board said vessel extend over at least two blocks at the aft end of the vessel, at least one of the block(s) being moveable transverse of the longitudinal axis of the vessel and/or longitudinally of the vessel; the moveable block defining a point of attack for a tension force from the tow line, characterized in that the vessel having a manoeuvring unit, the manoeuvring unit being coupled to receive input from a navigation system, one of these inputs being a desired heading and/or course over ground for the vessel; the manoeuvring unit comprising a calculation unit, which recalculates a change of heading to a moment of force, which will cause the necessary change of heading and/or course over ground to achieve the desired heading and/or course over ground, that the tension force from the tow line is calculated, that a transverse and/or longitudinal movement of at least one of the block (s), which results in the desired moment of force is calculated, and that the manoeuvring unit sends a signal to an actuator, which moves the block a distance, which provides the desired moment of force, and that the manoeuvring unit is coupled to at least one of the winches to provide for reeling out or in tow line to reduce or increase tension in the tow line coupled to said winch, and that the manoeuvring unit further is coupled to a rudder on the vessel to, if required, provide a rudder deflection to achieve the desired heading and/or course over ground for the vessel.

In an optional embodiment, the calculation unit also detects an angle of the tow lines relative to the vessel, preferably both relative to the horizontal and vertical axes.

In an alternative embodiment, when at least one of the blocks is moved longitudinally and/or transversal of the vessel and the vessel turns with respect to the direction of the tow line, a moment of force resulting from a force component transverse of said vessel of said tension force and an arm between the point of attack of the tension force and a rotational centre of the vessel is continuously calculated, said arm being continuously adjusted to achieve a desired moment of force.

### Brief description of drawings

The invention will now be described in more detail, referring to the embodiments illustrated in the drawings, in which:
Figure 1 shows a trawler with a trawl seen from above,
Figure 2 shows a first embodiment of a trawler seen from aft,
Figure 3 shows another embodiment of a trawler seen from aft,
Figure 4 shows a detail of figure 1, showing the trawler,
Figure 5 shows an alternative embodiment for obtaining a change of point of attack of the force from the trawl, and
Figure 6 shows the embodiment of figure 5 as the vessel is turning.

### Detailed description of the invention

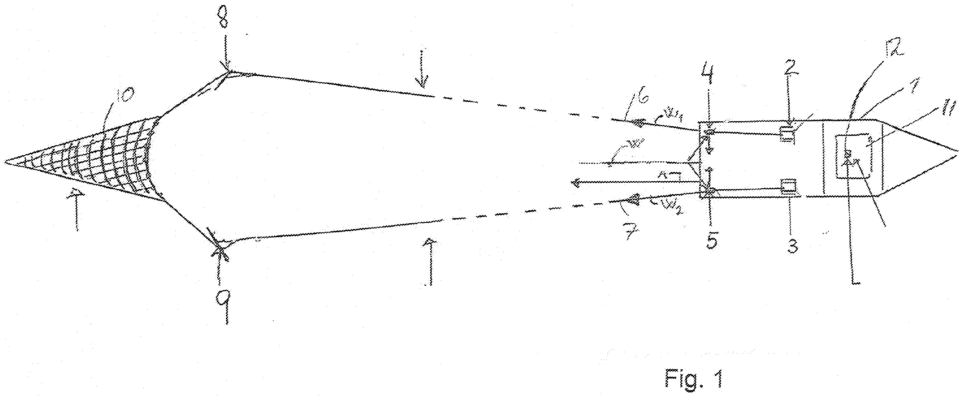

Figure 1 shows a trawler 1. The trawler has a pair of trawl winches 2, 3. There are usually further winches, but only two are shown for the purpose of illustrating the present invention.

At the stern of the trawler 1 is a pair of trawl blocks 4, 5. A pair of warp lines 6, 7 extend from each winch 2, 3 over a respective trawl block 4, 5 to a respective trawl door 8, 9. The trawl doors are coupled to a respective wing end of a trawl net 10.

The trawler has a wheelhouse or bridge 11. A manoeuvring unit (hereinafter exemplified by an autopilot device) 12 is illustrated within the wheelhouse 11. The autopilot 12 is coupled to the rudder (not shown) and the engine (not shown). It receives input from a navigation system, which conventionally is satellite based (such as GPS) but may also include a compass.

All of the above is common knowledge within the field of trawling, and the details will be well known to the person of skill.

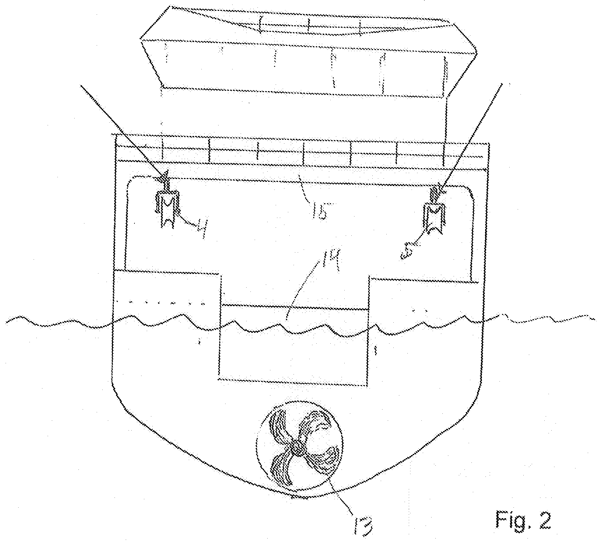

Figure 2 shows the trawler 1 from the aft in a first embodiment. The propeller 13 is shown. The rudder has been omitted.

At the stern is a trawl ramp 14. Also, at the stern is a gantry 15. A pair of trawl blocks 4, 5 are suspended from the gantry 15. The trawls blocks 4, 5 may be moved along the gantry.

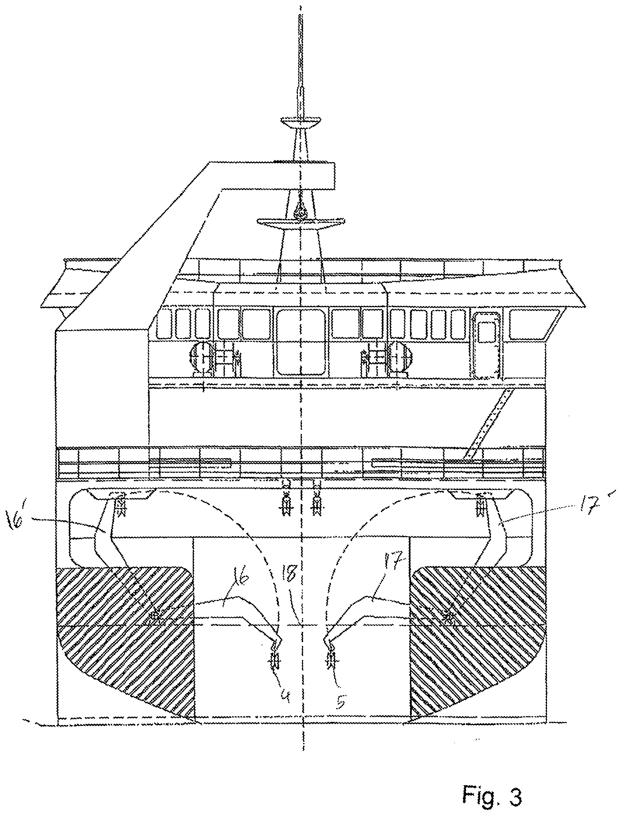

Figure 3 shows another embodiment where the trawl blocks 4, 5 are arranged at the other ends of davits 16, 17. The davits can be moved between an outer position 16', 17' where the trawl blocks 4, 5 are at their furthest position relative to the centre line 18 of the boat, and an inner position 16, 17, where they are at their closest to the centre line 18. These types of davits are commonly called ice davits, as their purpose is to move the trawl blocks away from ice that travels along the boat sides.

The trawl winches 2, 3 are equipped with sensors that measure the hydraulic pressure in the hydraulic motors (not shown) that rotate the winches, or if the winch is electrically driven, the torque of the motor is measured. This pressure or torque is corresponding to the tension W1, W2 in the respective warps. There may also be sensors that measure the tension more directly.

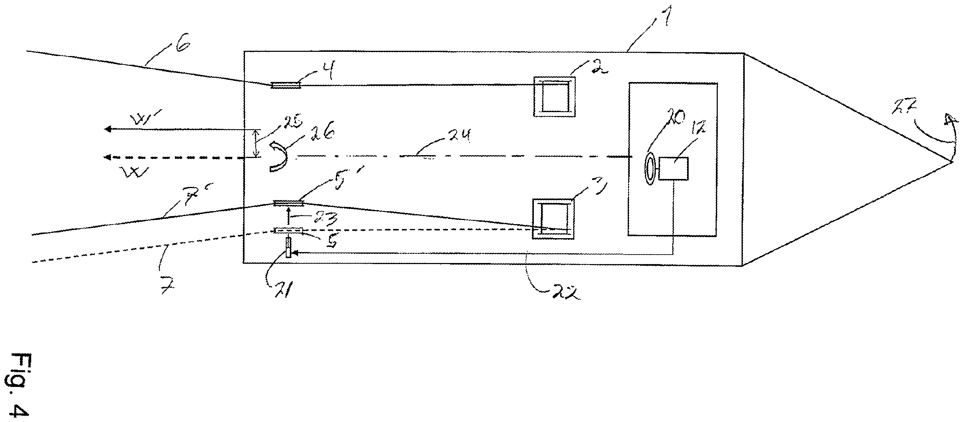

As shown in figure 1, the warp tension W1, W2 in the warps have points of attack at the positions of the trawl blocks 4, 5. When the trawl blocks are placed at an equal distance from the centre 18 of the boat, the tension forces W1, W2 are balanced, and the resulting force W pulls approximately straight aftward on the boat. However, if the blocks 4, 5 are set at positions with different distances from the centre 18, as shown in figure 4, the resulting force W will have a point of attack shifted laterally with respect to the length of the boat. This resulting force will pull the stern of the boat to one side. The principle of the present invention is to shift one or both of the trawl blocks laterally, and/or longitudinally, so that the resulting force W is also shifted, giving a vector of force laterally, as illustrated by the arrow W in figure 4. Then the force W' will attack the boat with an arm 25 from the centre line of the boat. The force will then pull the boat towards one side and hence turn the boat.

This is shown more detailed in figure 4, which shows the trawler 1 in figure 1. In the wheelhouse 11, the wheel or helm 20 is shown, which is coupled to the autopilot 12. The two trawl winches 2, 3, and the two trawl blocks 4, 5 are also shown. The autopilot 12 is coupled to an actuator 21 that is connected, via a control line 22, to one of the trawl blocks 5. The autopilot 12 may in a similar way also be coupled to an actuator (not shown) that is connected to the other trawl block 4. In the simplest embodiment, it is sufficient that the autopilot is coupled to only one trawl block 5. It is, however, preferable to couple the autopilot 12 to both trawl blocks 4, 5.

The actuator 21 may be a hydraulic or an electric actuator 12, or any other actuator that is capable of shifting the trawl block 5 laterally in the direction of the arrow 23. It is of course also within the ambit of the invention that the actuator is capable of shifting the trawl block 5 in the opposite direction, i.e. outwards relative to the centre line 24 of the boat 1.

If the autopilot 12 determines that the course over ground of the boat 1 is to be changed, e.g., towards the port side, it may shift the starboard trawl block 5 towards the centre of the boat 1, i.e. closer to the centre line 24, as shown by reference numeral 5'. This will shift the resultant force W also towards the port side, i.e. to the position denoted by W.

The resultant force W imposed by the trawl wires 6, 7 on the boat 1 is thereby attacking the boat port of the centre line 24 with an arm 25. This causes a moment of force 26 on the boat, which strives to shift or turn the vessel towards port. The same effect can be achieved by shifting the port trawl block 4 away from the centre line 24.

A shift and/or turn of the vessel in the starboard direction will occur if the port side trawl block 4 is shifted towards the centre line 24 or the starboard trawl 5 block is shifted away from the centre line.

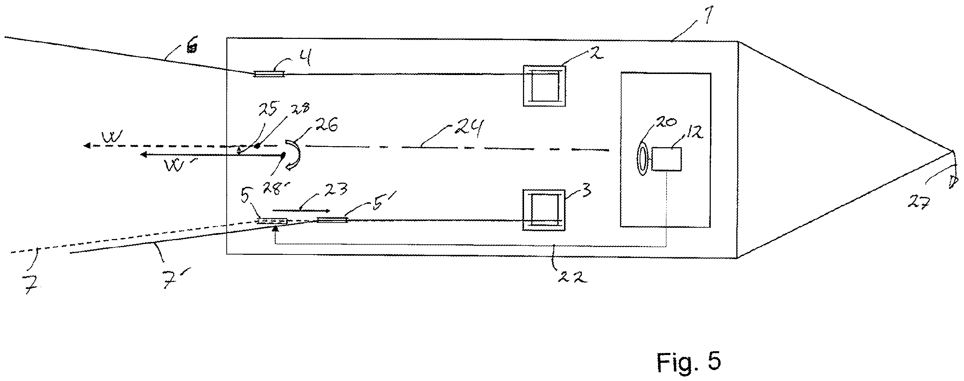

As an alternative, to shifting one or more of the blocks laterally, it is also possible to shift the block or blocks longitudinally with respect to the vessel. An example of this is illustrated in figure 5.

Figure 5 shows a block 5 in its initial position where it is at the same distance from the aft end of the vessel 1 as an opposite block 4. The block 5 is then moved a distance forward on the vessel, as illustrated by the arrow 23, to a position 5'. This change in position of the block 5 will also shift the point of attack of the trawl wire 7, so that the trawl wire will extend from the vessel 1 as illustrated by the line 7'.

The trawl wire 7' will move slightly outward from the initial position 7. As the trawl net is positioned several hundred metres behind the vessel 1, the change in angle of the trawl wire 7, 7' is neglectable, so the shift of the trawl wire 7, 7' may be regarded as a parallel shift. Consequently, the slight outward shift of the trawl wire 7, 7' will also move the resultant force from the trawl wires 6, 7' slightly to one side, as shown by the double arrow 25, so that the resultant force vector W will move to position of the force vector W'. This will create a moment of force 26 that will move the centre of rotation of the vessel forwards, and possibly also slightly transverse and act to turn the vessel 1. This moment of force 26 is smaller than if the block 5 is shifted laterally the same distance, but the technique of shifting the block 5 longitudinally can be used as a supplement or substitute for moving it laterally.

As seen in figure 5, the point of attack 28 of the vector of the resultant force W will also shift in the longitudinal direction of the vessel to a point 28'.

It is also conceivable to combine a lateral and a longitudinal shift of one or more of the blocks.

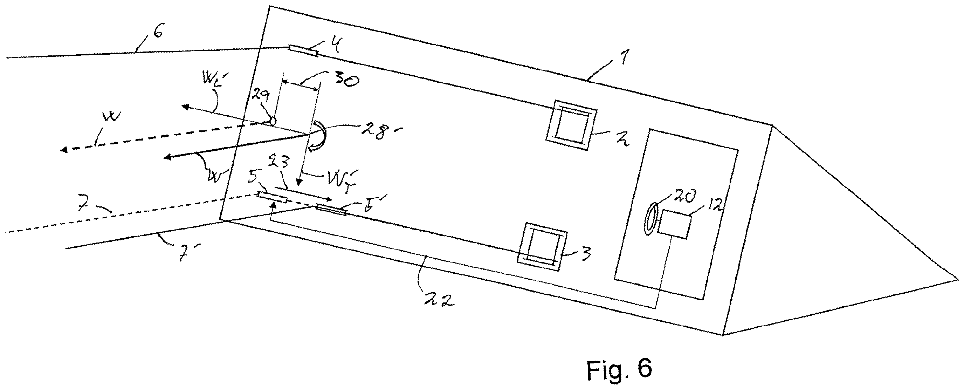

Although the longitudinal shift of the point of attack 28' of the resultant force vector has limited effect when the vector is parallel with the centre axis 24, this longitudinal shift of the point of attack will indeed have effect when the vessel 1 starts to turn. This is illustrated in figure 6.

As seen in figure 6, the resultant force W' can be decomposed into a transverse force component W_{T}' and a longitudinal force component W_{L}'. Both components will tend to turn the vessel about the centre of rotation 29, but the transverse component W_{T}' works on a substantially longer arm 30 than the longitudinal component W_{L}'. The more the vessel turns in relation to the trawl, i.e. the direction of the trawl wires 6, 7, the greater the transverse force component W_{T}' will become and the greater in turn the moment of force acting to turn the vessel will become.

By adjusting the longitudinal position of the block 5, the arm 30 between the centre of rotation and the point of attack can be adjusted to give the momentum of force desired for the turning of the vessel 1. For example, the block can be moved further aft as the transverse force component W_{T}' increases with a reduced angle between the vessel centre axis and the trawl wires 6, 7 to reduce the arm 30 and thereby keeping the moment of force 26 substantially constant.

The more one of the trawl blocks is shifted laterally and/or longitudinally, or both trawl blocks are shifted laterally towards the same side, the more the force W is shifted towards the same side, and the sharper the boat will turn. This turning of the boat can be done without changing the rudder position. The rudder can be kept in a zero position, i.e. in parallel with the longitudinal axis of the boat, or be allowed to swing with the water flow. Hence, the drag created by the rudder will not increase and the fuel consumption can be kept at the same level.

When one or more of the trawl blocks are moved laterally and/or longitudinally, the path of the trawl wire from the stern of the vessel to the winch, will change somewhat. This may result in a longer or shorter path of the wire on board the vessel. The calculation unit may be set up to take this change in path length into account and adjust the length of the wire to compensate for this change in path length.

The preferred embodiment of the invention, as illustrated in the figures, works as follows:
The autopilot that is coupled to the actuator(s) 21 that displaces the trawl blocks 3, 4 also receives the warp tension value. When the autopilot 12 determines that a change in heading is required, either because the boat has drifted away from the intended course over ground or the course over ground is changed by manual or automatic input, the autopilot calculates the moment of force needed to turn the boat to the intended course over ground. It checks the tension in the warps, calculates the resultant force W, and determines the arm 25 or 30 required by the resultant force W to create the required moment of force. If the required arm 25 or 30 can be achieved by shifting only one trawl block 4, 5, the autopilot will then signal the applicable actuator 21 to shift one of the trawl blocks 4, 5 the distance corresponding to the required arm.

If the required arm 25, 30 cannot be achieved by shifting only one of the blocks 4,5, the autopilot will divide the shifting distance between the blocks and signal both actuators to each shift a respective one of the blocks 4, 5.

When the intended course over ground has been reached, the autopilot will signal the actuator(s) 21 to shift the one block that has been shifted, or both blocks, 4, 5 back to a position where the resultant force W is attacking the boat at the centre line 24, or for the longitudinal shifting where the arm 30 is close to zero.

Depending on the vessel and the trawl, it may also happen that the vessel instead of turning the bow towards the intended heading, will "crawl" sideways or partly sideways in the intended course over ground, but with the bow pointing in a different direction. This may be perfectly acceptable.

If there is a transverse current or other influence, that tries to push the boat away from the correct course over ground, the autopilot may keep the blocks 4, 5 at a non-equal distance from the centre line 24, or at a different longitudinal position.

It is also an option, according to the invention, to combine the lateral and/or longitudinal shifting of one or both trawl blocks 4, 5 with an angling of the rudder. This is especially convenient, if the change of course over ground is of a magnitude that cannot be achieved by moving the blocks 4, 5. The required rudder deflection will in such a case be of a substantially smaller magnitude than if the change of course over ground were to be done by the rudder alone.

If the boat has azimuth thrusters, pods or other means of manoeuvring instead of a rudder, these will be positioned to give the least drag in the water.

Although, the tension in the warps 6, 7 ideally should be equal during the haul, it may happen that the tension is non-equal. The autopilot will have to take this into account. Deviations from equal tension may result in the boat changing its heading, or by different applied forces to the towed equipment. Traditionally, this has been counteracted by aligning the tension (usually represented by the hydraulic pressure) in the winch system, i.e. in practice by giving out or reeling in one of the warps.

When the vessel is heading straight forward, but is subject to side currents, or is in a slack turn (such as when the trawl follows an edge), one of the blocks will be moved, e.g., moved inwards. Thereby the vessel will turn in the same direction as the movement. This results in the warps that are on the outboard side of the bend experiencing an increased tension. At the same time, the warps on the inboard side of the bend experience a reduced tension. This will attempt to counteract the turning of the vessel. To prevent this, the warps on the outboard side of the turn will be slackened by reeling out wire, and/or the warps on the inboard side will be tightened by reeling in wire, until the warps have the desired tension. The autopilot will be coupled to an actuator on the winch to cause reeling in or out of wire.

The resultant force from the trawl should ideally be parallel to the centre line of the boat when the vessel is moving straight ahead. However, in certain conditions it may be at an angle to the centre line. Consequently, it is an advantage to measure the angle of the warps relatively to the boat, so that the angle of attack of the resultant force may be taken into account.

Although, the above describes manoeuvring of a trawler, the present invention may also be used for manoeuvring other type of boats that drag a load behind it. One such example is tugs. Another example is seismic vessels. Seismic vessels will have from only one and up to multiple of seismic cables attached. By letting the cable run over a block immediately before the cable leaves the vessel, and arranging the block so that it can be shifted laterally and/or longitudinally, the point of attack of the drag force from the cable can be shifted laterally and/or longitudinally. The drag force from a seismic cable is generally substantially lower than the drag force of a trawl, but using the drag force as a means for changing the heading of the vessel, may reduce the rudder deflection necessary, and hence reduce the drag of the rudder.

## Claims

1. Arrangement for manoeuvring a floating vessel (1) with reduced need for or without the need for rudder deflection, the vessel (1) towing a load, such as a trawl (10), comprising at least two tow lines (6, 7) coupled to a respective winch (2, 3) on board said vessel (1), and at least two blocks (4, 5) at the aft end of the vessel (1), over which a respective tow line (6, 7) extends, at least one of the blocks (4, 5) being moveable transverse to the longitudinal axis (24) of the vessel (1) and/or longitudinally of the vessel (1); the position of the moveable block(s) (4, 5) defining a point of attack for a tension force from the tow line (6, 7), wherein the arrangement further comprises a manoeuvring unit (12), the manoeuvring unit (12) being adapted to receive input from a navigation system, and said manoeuvring unit (12) being coupled to an actuator (21) moving said block(s) (4, 5) transverse of the longitudinal axis (24) of the vessel (1) and/or longitudinally of the vessel (1), in order to change the moment of force (26) of the tension force (W) about a rotational centre of the vessel (1), and that the manoeuvring unit (12) is equipped with a calculation unit, which detects the tension force of the tow line(s) and calculates the moment of force (26) from the tension force on the vessel (1), whereby the manoeuvring unit (12) is adapted to use a change in said moment of force (26) to manoeuvre the vessel (1), that the manoeuvring unit (12) is coupled to at least one of said winches (2, 3), and being adapted to reel out or in tow line (6, 7) to reduce or increase tension in the tow line (6, 7) coupled to said winch (2, 3), and that the manoeuvring unit (12) further is coupled to a rudder on the vessel (1), so that the manoeuvring unit (12), if required, initiates a rudder deflection to achieve a desired course for the vessel (1).

2. Arrangement according to claim 1, **characterized in that** the calculation unit is adapted to calculate the change in the resulting moment of force (26) from the detected tension force and the movement of the at least one block (4, 5).

3. Arrangement according to claim 1 or 2, **characterized in that** each tow line (6, 7) in a given situation are kept at equal length or tension by reeling in or out line, whereby the calculation unit is coupled to an actuator on at least one of the winches (2, 3) to reel in or out line.

4. Arrangement according to claim 1 or 2, **characterized in that** each tow line (6, 7) in a given situation are kept at different lengths or tensions by reeling in or out line, whereby the calculation unit is coupled to an actuator on at least one of the winches (2, 3) to reel in or out line.

5. Arrangement according to claim 3 or 4, **characterized in that** the calculation unit coupled to an actuator on at least one of the winches is adapted to control reeling in or out tow line (6, 7) extending over a block (4, 5) that has been moved, to reduce or increase tension in this line (6, 7).

6. Arrangement according to claim 3 or 4, **characterized in that** the calculation unit is adapted to reel in or out tow line (6, 7) at the opposite side of the vessel (1) from a block (4, 5) that has been moved, to increase or reduce tension in this line (6, 7).

7. Arrangement according to one of the preceding claims, **characterized in that** the calculation unit also is adapted to detect an angle of the tow line (6, 7) relative to the longitudinal axis (24) and/or vertical axis of the vessel (1).

8. Arrangement according to claims 2, 3, 4, 5, 6 or 7, **characterized in that** the calculation unit is adapted to determine a combined transverse and/or longitudinal movement of the moveable blocks (4, 5), which results in a desired moment of force (26) for manoeuvring the vessel (1).

9. Method of manoeuvring a floating vessel (1) with reduced need for or without the need for rudder deflection, whereby the vessel (1) is towing a load, such as a trawl (10), and where at least two tow lines (6, 7) coupled to a respective winch (2, 3) on board said vessel (1) extend over at least two blocks (4, 5) at the aft end of the vessel (1), at least one of the block(s) (4, 5) being moveable transverse of the longitudinal axis (24) of the vessel (1) and/or longitudinally of the vessel (1); the moveable block (4, 5) defining a point of attack for a tension force from the tow line, the vessel (1) having a manoeuvring unit (12), the manoeuvring unit (12) being coupled to receive input from a navigation system, one of these inputs being a desired heading for the vessel (1); the manoeuvring unit (12) comprising a calculation unit, which recalculates a change of heading to a moment of force (26), which will cause the necessary change of heading to achieve the desired heading, that the tension force from the tow line is calculated, that a transverse or longitudinal movement (23) of at least one of the block(s) (4, 6), which results in the desired moment of force (26), is calculated, and that the manoeuvring unit (12) sends a signal to an actuator (21), which moves the block a distance, which provides the desired moment of force (26), and that the manoeuvring unit (12) is coupled to at least one of the winches (2, 3) to provide for reeling out or in tow line (6, 7) to reduce or increase tension in the tow line (6, 7) coupled to said winch (2, 3), and that the manoeuvring unit (12) further is coupled to a rudder on the vessel (1) to, if required, provide a rudder deflection to achieve the desired heading and/or course over ground for the vessel (1).

10. Method of claim 9, **characterized in that** the lengths of each tow line (6, 7) are kept equal when the vessel (1) is heading straight forward,
- that the manoeuvring unit (12) moves one block (4, 5),
- that the vessel (1) starts to turn as a result of the change of moment of force (26) acting on the vessel (1),
- that as a result of the change of heading, tow lines (6, 7) that are on the outside of the bend are subject to an increased tension, which in turn results in a skew, which initially counteracts the change of heading of the vessel (1), and
- that lines (6, 7) that are at the outside of the bend are reeled out to adjust the skew, or that lines (6, 7) that are on the opposite side of the longitudinal axis of the vessel (1) are reeled in.

11. Method according to claims 9 or 10, **characterized in that** the calculation unit also detects an angle of the tow line (6, 7) relative to the vessel (1), preferably both relative to the horizontal and vertical axes.

12. Method according to any of the claims 9-11, **characterized in that** when at least one of the blocks (4, 5) is moved longitudinally and/or transversal of the vessel (1) and the vessel turns with respect to the direction of the tow line (6, 7) a moment of force (26) resulting from a force component (W_{T}') transverse of said vessel of said tension force (W) and an arm (30) between the point of attack of the tension force (W) and a rotational centre of the vessel is continuously calculated, said arm (30) being continuously adjusted to achieve a desired moment of force (26).

## Patentansprüche

1. Anordnung zum Manövrieren eines schwimmenden Schiffs (1) mit verringerter Notwendigkeit oder ohne Notwendigkeit zum Ruderausschlag, wobei das Schiff (1) eine Last, beispielsweise ein Schleppnetz (10), schleppt, das mindestens zwei Schleppleinen (6, 7), die mit einer jeweiligen Winde (2, 3) an Bord des Schiffs (1) gekoppelt sind, und mindestens zwei Blöcke (4, 5) am hinteren Ende des Schiffs (1) umfasst, über die eine jeweilige Schleppleine (6, 7) verläuft, wobei mindestens einer der Blöcke (4, 5) quer zur Längsachse (24) des Schiffs (1) und/oder in Längsrichtung des Schiffs (1) beweglich ist; wobei die Position des/der beweglichen Blocks/Blöcke (4, 5) einen Angriffspunkt für eine Spannkraft von der Schleppleine (6, 7) definiert, wobei die
die Anordnung ferner eine Manövriereinheit (12) umfasst, wobei die Manövriereinheit (12) angepasst ist, um Eingaben von einem Navigationssystem zu empfangen, und wobei die Manövriereinheit (12) mit einem Stellantrieb (21) gekoppelt ist, der den/die Block/Blöcke (4, 5) quer zur Längsachse (24) des Schiffs (1) und/oder in Längsrichtung des Schiffs (1) bewegt, um das Kraftmoment (26) der Spannkraft (W') um ein Rotationszentrum des Schiffs (1) zu verändern, und dass die Manövriereinheit (12) mit einer Berechnungseinheit ausgestattet ist, die die Spannkraft der Schleppleine(n) erfasst und aus der Spannkraft auf das Schiff (1) das Kraftmoment (26) berechnet, wobei die Manövriereinheit (12) dazu angepasst ist, eine Änderung des Kraftmoments (26) zum Manövrieren des Schiffs (1) zu verwenden, dass die Manövriereinheit (12) mit mindestens einer der Winden (2, 3) gekoppelt ist, und dazu angepasst ist die Schleppleine (6, 7) ab- oder aufzurollen, um die Spannung in der mit der Winde (2, 3) gekoppelten Schleppleine (6, 7) zu verringern oder zu erhöhen, und dass die Manövriereinheit (12) ferner mit einem Ruder am Schiff (1) gekoppelt ist, sodass die Manövriereinheit (12) bei Bedarf einen Ruderausschlag einleitet, um einen gewünschten Kurs für das Schiff (1) zu erreichen.

2. Anordnung gemäß Anspruch 1, **dadurch gekennzeichnet, dass** die Berechnungseinheit dazu angepasst ist, aus der erfassten Spannkraft und der Bewegung des mindestens einen Blocks (4, 5) die Änderung des resultierenden Kraftmoments (26) zu berechnen.

3. Anordnung gemäß Anspruch 1 oder 2, **dadurch gekennzeichnet, dass** jede Schleppleine (6, 7) in einer gegebenen Situation durch Auf- oder Abrollen der Leine auf gleicher Länge oder Spannung gehalten wird, wobei die Berechnungseinheit mit einem Stellantrieb an mindestens einer der Winden (2, 3) zum Auf- oder Abrollen der Leine gekoppelt ist.

4. Anordnung gemäß Anspruch 1 oder 2, **dadurch gekennzeichnet, dass** jede Schleppleine (6, 7) in einer gegebenen Situation durch Auf- oder Abrollen der Leine auf unterschiedlicher Länge oder Spannung gehalten wird, wobei die Berechnungseinheit mit einem Stellantrieb an mindestens einer der Winden (2, 3) zum Auf- oder Abrollen der Leine gekoppelt ist.

5. Anordnung gemäß Anspruch 3 oder 4, **dadurch gekennzeichnet, dass** die mit einem Stellantrieb an mindestens einer der Winden gekoppelte Berechnungseinheit dazu angepasst ist, das Auf- oder Abrollen der Schleppleine (6, 7) zu steuern, die über einen Block (4, 5) verläuft, der bewegt wurde, um die Spannung in dieser Leine (6, 7) zu verringern oder zu erhöhen.

6. Anordnung gemäß Anspruch 3 oder 4, **dadurch gekennzeichnet, dass** die Berechnungseinheit dazu angepasst ist, die Schleppleine (6, 7) auf der gegenüberliegenden Seite des Schiffs (1) von einem bewegten Block (4, 5) auf oder abzurollen , um die Spannung in dieser Leine (6, 7) zu erhöhen oder zu verringern.

7. Anordnung gemäß einem der vorhergehenden Ansprüche, **dadurch gekennzeichnet, dass** die Berechnungseinheit außerdem dazu angepasst ist, einen Winkel der Schleppleine (6, 7) relativ zur Längsachse (24) und/oder vertikalen Achse des Schiffs (1) zu erfassen.

8. Anordnung gemäß Anspruch 2, 3, 4, 5, 6 oder 7, **dadurch gekennzeichnet, dass** die Berechnungseinheit dazu angepasst ist, eine kombinierte Quer- und/oder Längsbewegung der beweglichen Blöcke (4, 5) zu ermitteln, die zu einem gewünschten Kraftmoment (26) zum Manövrieren des Schiffes (1) führt.

9. Verfahren zum Manövrieren eines schwimmenden Schiffs (1) mit verringerter Notwendigkeit oder ohne Notwendigkeit zum Ruderausschlag, wobei das Schiff (1) eine Last, beispielsweise ein Schleppnetz (10), schleppt und wobei mindestens zwei Schleppleinen (6, 7), die mit einer jeweiligen Winde (2, 3) an Bord des Schiffs (1) gekoppelt sind, über mindestens zwei Blöcke (4, 5) am hinteren Ende des Schiffs (1) verlaufen, wobei mindestens einer des Blocks/der Blöcke (4, 5) quer zur Längsachse (24) des Schiffs (1) und/oder in Längsrichtung des Schiffs (1) beweglich ist; wobei der bewegliche Block (4, 5) einen Angriffspunkt für eine Spannkraft von der Schleppleine definiert, wobei das Schiff (1) eine Manövriereinheit (12) aufweist, wobei die
die Manövriereinheit (12) dazu gekoppelt ist, Eingaben von einem Navigationssystem zu empfangen, wobei eine dieser Eingaben ein gewünschter Kurs für das Schiff (1) ist; wobei die Manövriereinheit (12) eine Berechnungseinheit umfasst, die eine Kursänderung in ein Kraftmoment (26) umrechnet, das die notwendige Kursänderung zum Erreichen des gewünschten Kurses bewirkt, dass die Spannkraft aus der Schleppleine berechnet wird, dass eine Quer- oder Längsbewegung (23) mindestens eines des Blocks/der Blöcke (4, 6), die zu dem gewünschten Kraftmoment (26) führt, berechnet wird und dass die Manövriereinheit (12) ein Signal an einen Stellantrieb (21) sendet, der den Block um eine Strecke bewegt, die das gewünschte Kraftmoment (26) bereitstellt, und dass die Manövriereinheit (12) mit mindestens einer der Winden (2, 3) gekoppelt ist, um für das Ab- oder Aufrollen der Schleppleine (6, 7) zu sorgen, um die Spannung in der Schleppleine (6, 7) zu verringern oder zu erhöhen, die mit der Winde (2, 3) gekoppelt ist, und dass die Manövriereinheit (12) ferner mit einem Ruder am Schiff (1) gekoppelt ist, um bei Bedarf einen Ruderausschlag bereitzustellen, um den gewünschten Kurs und/oder Kurs über Grund für das Schiff (1) zu erreichen.

10. Verfahren nach Anspruch 9, **dadurch gekennzeichnet, dass** die Längen jeder Schleppleine (6, 7) gleich gehalten werden, wenn das Schiff (1) geradeaus fährt,
- dass die Manövriereinheit (12) einen Block (4, 5) bewegt,
- dass sich das Schiff (1) als Ergebnis der Änderung des auf das Schiff (1) wirkenden Kraftmoments (26) zu drehen beginnt,
- dass als Ergebnis der Kursänderung kurvenäußere Schleppleinen (6, 7) einer erhöhten Spannung ausgesetzt sind, was wiederum zu einem Schräglauf führt, der der Kursänderung des Schiffs (1) zunächst entgegenwirkt, und
- dass kurvenäußere Leinen (6, 7) zum Ausgleich des Schräglaufs abgerollt werden, oder dass Leinen (6, 7), die sich auf der gegenüberliegenden Seite der Längsachse des Schiffs (1) befinden, aufgerollt werden.

11. Verfahren gemäß Anspruch 9 oder 10, **dadurch gekennzeichnet, dass** die Berechnungseinheit auch einen Winkel der Schleppleine (6, 7) relativ zum Schiff (1) erfasst, vorzugsweise sowohl relativ zur horizontalen als auch zur vertikalen Achse.

12. Verfahren gemäß einem der Ansprüche 9-11, **dadurch gekennzeichnet, dass**, wenn mindestens einer der Blöcke (4, 5) in Längs- und/oder Querrichtung des Schiffs (1) bewegt wird und sich das Schiff in Bezug auf die Richtung der Schleppleine (6, 7) dreht, ein Kraftmoment (26), das aus einer Kraftkomponente (W_{T}'), die quer zum Schiff liegt, der Spannkraft (W') und einem Arm (30) zwischen dem Angriffspunkt der Spannkraft (W') und einem Rotationszentrum des Schiffs resultiert, kontinuierlich berechnet wird, wobei der Arm (30) kontinuierlich angepasst wird, um ein gewünschtes Kraftmoment (26) zu erreichen.

## Revendications

1. Agencement de manoeuvre d'un navire flottant (1) avec un besoin réduit ou sans besoin de déviation du gouvernail, le navire (1) remorquant une charge, telle qu'un chalut (10), comprenant au moins deux lignes de remorquage (6, 7) couplées à un treuil respectif (2, 3) à bord dudit navire (1), et au moins deux blocs (4, 5) à l'extrémité arrière du navire (1), sur lesquels s'étend une ligne de remorquage respective (6, 7), au moins un des blocs (4, 5) étant mobile transversalement à l'axe longitudinal (24) du navire (1) et/ou longitudinalement au navire (1) ; la position du ou des blocs mobile(s) (4, 5) définissant un point d'attaque pour une force de tension provenant de la ligne de remorquage (6, 7), dans lequel
l'agencement comprend en outre une unité de manoeuvre (12), l'unité de manoeuvre (12) étant adaptée pour recevoir une entrée d'un système de navigation, et ladite unité de manoeuvre (12) étant couplée à un actionneur (21) déplaçant le(s)dit(s) bloc(s) (4, 5) transversalement à l'axe longitudinal (24) du navire (1) et/ou longitudinalement au navire (1), afin de modifier le moment de force (26) de la force de tension (W') autour d'un centre de rotation du navire (1), et en ce que l'unité de manoeuvre (12) est équipée d'une unité de calcul, qui détecte la force de tension de la ou des lignes de remorquage et calcule le moment de force (26) à partir de la force de tension sur le navire (1), grâce à quoi l'unité de manoeuvre (12) est adaptée pour utiliser un changement dudit moment de force (26) pour manoeuvrer le navire (1), en ce que l'unité de manoeuvre (12) est couplée à au moins un desdits treuils (2, 3), et étant adapté pour dérouler ou enrouler la ligne de remorquage (6, 7) pour réduire ou augmenter la tension dans la ligne de remorquage (6, 7) couplée audit treuil (2, 3), et en ce que l'unité de manoeuvre (12) est en outre couplée à un gouvernail sur le navire (1), de sorte que l'unité de manoeuvre (12) initie, si nécessaire, une déviation du gouvernail pour obtenir une route souhaitée pour le navire (1).

2. Agencement selon la revendication 1, **caractérisé en ce que** l'unité de calcul est adaptée pour calculer le changement du moment de force (26) résultant à partir de la force de tension détectée et du mouvement de l'au moins un bloc (4, 5).

3. Agencement selon la revendication 1 ou 2, **caractérisé en ce que** chaque ligne de remorquage (6, 7) dans une situation donnée, est maintenue à longueur ou tension égale par enroulement ou déroulement de la ligne, moyennant quoi l'unité de calcul est couplée à un actionneur sur au moins un des treuils (2, 3) pour enrouler ou dérouler la ligne.

4. Agencement selon la revendication 1 ou 2, **caractérisé en ce que** chaque ligne de remorquage (6, 7), dans une situation donnée, est maintenue à des longueurs ou tensions différentes par enroulement ou déroulement de la ligne, moyennant quoi l'unité de calcul est couplée à un actionneur sur au moins un des treuils (2, 3) pour enrouler ou dérouler la ligne.

5. Agencement selon la revendication 3 ou 4, **caractérisé en ce que** l'unité de calcul couplée à un actionneur sur au moins un des treuils est adaptée pour commander l'enroulement ou le déroulement de la ligne de remorquage (6, 7) s'étendant sur un bloc (4, 5) qui a été déplacé, afin de réduire ou augmenter la tension dans cette ligne (6, 7).

6. Agencement selon la revendication 3 ou 4, **caractérisé en ce que** l'unité de calcul est adaptée pour enrouler ou dérouler la ligne remorquage (6, 7) du côté opposé du navire (1) à partir d'un bloc (4, 5) qui a été déplacé, afin d'augmenter ou réduire la tension dans cette ligne (6, 7).

7. Agencement selon l'une des revendications précédentes, **caractérisé en ce que** l'unité de calcul est également adaptée pour détecter un angle de la ligne de remorquage (6, 7) par rapport à l'axe longitudinal (24) et/ou à l'axe vertical du navire (1).

8. Agencement selon les revendications 2, 3, 4, 5, 6 ou 7, **caractérisé en ce que** l'unité de calcul est adaptée pour déterminer un mouvement transversal et/ou longitudinal combiné des blocs mobiles (4, 5), qui aboutit à un moment de force (26) souhaité pour manoeuvrer le navire (1).

9. Procédé de manoeuvre d'un navire flottant (1) avec un besoin réduit ou sans besoin de déviation du gouvernail, par lequel le navire (1) remorque une charge, telle qu'un chalut (10), et dans lequel au moins deux lignes de remorquage (6, 7) couplées à un treuil respectif (2, 3) à bord dudit navire (1) s'étendent sur au moins deux blocs (4, 5) à l'extrémité arrière du navire (1), au moins un des blocs (4, 5) étant mobile transversalement à l'axe longitudinal (24) du navire (1) et/ou longitudinalement au navire (1) ; le bloc mobile (4, 5) définissant un point d'attaque pour une force de tension provenant de la ligne de remorquage,
le navire (1) comportant une unité de manoeuvre (12), l'unité de manoeuvre (12) étant couplée pour recevoir une entrée d'un système de navigation, l'une de ces entrées étant un cap souhaité pour le navire (1) ; l'unité de manoeuvre (12) comprenant une unité de calcul, qui recalcule un changement de cap en un moment de force (26), qui provoquera le changement de cap nécessaire pour atteindre le cap souhaité, en ce que la force de tension provenant de la ligne de remorquage est calculée, en ce qu'un mouvement transversal ou longitudinal (23) d'au moins un des blocs (4, 6), qui a pour résultat le moment de force (26) souhaité, est calculé et en ce que l'unité de manoeuvre (12) envoie un signal à un actionneur (21), qui déplace le bloc sur une distance, qui fournit le moment de force souhaité (26), et en ce que l'unité de manoeuvre (12) est couplée à au moins un des treuils (2, 3) pour permettre le déroulement ou l'enroulement de la ligne de remorquage (6, 7) pour réduire ou augmenter la tension dans la ligne de remorquage (6, 7) couplée audit treuil (2, 3), et en ce que l'unité de manoeuvre (12) est en outre couplée à un gouvernail sur le navire (1) pour, si nécessaire, fournir une déviation du gouvernail pour obtenir le cap et/ou la route sur le fond souhaité pour le navire (1).

10. Procédé selon la revendication 9, **caractérisé en ce que** les longueurs de chaque ligne de remorquage (6, 7) sont maintenues égales lorsque le navire (1) suit un cap en ligne droite,
- **en ce que** l'unité de manoeuvre (12) déplace un bloc (4, 5),
- **en ce que** le navire (1) commence à tourner en résultat du changement du moment de force (26) agissant sur le navire (1),
- **en ce qu'**en raison du changement de cap, les lignes de remorquage (6, 7) qui se trouvent à l'extérieur de la courbe sont soumises à une tension accrue, ce qui entraîne à son tour une inclinaison qui contrecarre dans un premier temps le changement de cap du navire (1), et
- **en ce que** les lignes (6, 7) qui se trouvent à l'extérieur de la courbe sont déroulées pour ajuster l'inclinaison, ou **en ce que** les lignes (6, 7) qui se trouvent du côté opposé à l'axe longitudinal du navire (1) sont enroulées.

11. Procédé selon les revendications 9 ou 10, **caractérisé en ce que** l'unité de calcul détecte également un angle de la ligne de remorquage (6, 7) par rapport au navire (1), de préférence à la fois par rapport aux axes horizontal et vertical.

12. Procédé selon l'une quelconque des revendications 9 à 11, **caractérisé en ce que** lorsqu'au moins un des blocs (4, 5) est déplacé longitudinalement et/ou transversalement au navire (1) et le navire tourne par rapport à la direction de la ligne de remorquage (6, 7), un moment de force (26) résultant d'une composante de force (W_{T}') transversale à ladite force de tension (W') dudit navire et un bras (30) entre le point d'attaque de la force de tension (W') et un centre de rotation du navire est calculé en continu, ledit bras (30) étant ajusté en continu pour obtenir un moment de force souhaité (26).
